# EUROPEAN PATENT SPECIFICATION

(11) **EP 3 690 828 B1**
(45) Date of publication and mention of the grant of the patent: **22.01.2025**
(21) Application number: 19217761.6
(22) Date of filing: 18.12.2019
(51) Int. Cl.: G07C 9/00

(54) **VEHICLE CONTROL APPARATUS**
FAHRZEUGSTEUERUNGSVORRICHTUNG
APPAREIL DE COMMANDE DE VÉHICULE

(30) Priority: 31.01.2019 JP 2019015996
(43) Date of publication of application: 05.08.2020
(73) Proprietor: Toyo Denso Co., Ltd., Tokyo 105-0004 (JP)
(72) Inventor: OTA, Yuki, Saitama, 350-2280 (JP); HIRANO, Takaharu, Saitama, 350-2280 (JP); ENDO, Hiroaki, Saitama, 350-2280 (JP); OSHIMA, Takuya, Saitama, 350-2280 (JP); SUZUKI, Nasa, Saitama, 350-2280 (JP); YOSHIDA, Mitsutaka, Saitama, 350-2280 (JP)
(74) Representative: Haseltine Lake Kempner LLP

(56) References cited:
- EP-A1- 2 696 019
- WO-A1-2015/148611
- WO-A1-2017/078830
- US-A1- 2008 296 926
- US-B1- 9 992 461

## Description

### CROSS-REFERENCE TO RELATED APPLICATION

The present application claims priority under 35 U.S.C. §119 to Japanese Patent Application No. 2019-015996, filed on January 31, 2019.

### BACKGROUND

### 1. Technical Field

The present invention relates to a vehicle control apparatus which can cause a door of a vehicle to be opened, for example, when a user or the like merely steps on text or graphics which are projected onto a road surface, with his foot.

### 2. Description of Related Arts

In recent years, developments in an autonomous car have been increasingly made. To get in an autonomous car, a user should open a door of the autonomous car which is stopping. If a user is allowed to achieve such door-opening operation as described above in a noncontact manner from a periphery of an autonomous car, the user can get in a car smartly.

Foregoing, Japanese Unexamined Publication No. 2007-162459 discloses a hands-free vehicle-door opening/closing apparatus which allows a user to unlock a door of a vehicle and open a door without using his hands.

EP 2 696 019 A1 relates to a vehicle open/close body operating apparatus. US 2008/296926 A1 relates to an arms full vehicle closure activation apparatus and method. WO 2015/148611 A1 relates to a vehicle function control system using projected icons. WO 2017/078830 A1 discloses a visual communication apparatus affixed to a vehicle.

### SUMMARY

However, in the conventional hands-free vehicle-door opening/closing apparatus, there may arise the following problems which should be solved in order that a user can get in a car smartly.

Conventionally, it is designed such that a door is unlocked and opened when a part of a user's body, such as a foot, enters into a range of radiation of a laser beam. However, a user has difficulties in visually recognizing a laser beam simply because the laser beam is projected immediately under a vehicle, so that the user cannot identify a range of radiation and a location of radiation. Thus, it is difficult for a user to see where to put his foot.

It is an object of the present invention to provide a vehicle control apparatus which can cause a door of a vehicle, for example, to be opened more easily than before.

In order to attain the above-described object, a vehicle control apparatus according to the independent claim 1 is defined.

With the vehicle control apparatus according to the present invention, it is possible to easily cause a component of a vehicle to operate only by stepping on text or graphics which are projected onto a road surface, with a foot, and so, it is easy to find a place to be handled.

### BRIEF DESCRIPTION OF THE DRAWINGS

FIG. 1 is a block diagram of a vehicle control apparatus according to the present embodiment;
FIG. 2 is a view showing an example of a display form of text or graphics in the vehicle control apparatus according to the present embodiment;
FIG. 3 is a view for explanation of a display area in the vehicle control apparatus according to the present embodiment;
FIG. 4 is a view for explanation of a display area in the vehicle control apparatus according to the present embodiment; and
FIG. 5 is a flow chart showing an example of operations of the vehicle control apparatus according to the present embodiment.

### DETAILED DESCRIPTION

### [Configuration of vehicle control apparatus]

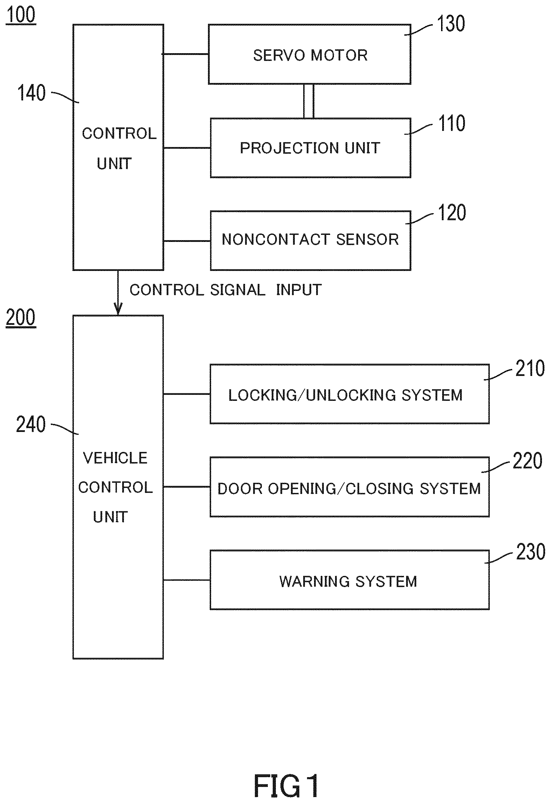

Hereinbelow, a vehicle control apparatus according to the present embodiment will be described in detail with reference to the accompanying drawings. FIG. 1 is a block diagram of a detection unit of the vehicle control apparatus according to the present embodiment.

As shown in FIG. 1, a detection unit 100 of the vehicle control apparatus according to the present embodiment includes a projection unit 110, a noncontact sensor 120, a servo motor 130, and a control unit 140.

The projection unit 110 projects text or graphics onto a road surface. The projection unit 110 is mounted in a vehicle in such a manner that the projection unit 110 can turn, and projects text or graphics in a form of a still image, animation, or a moving image, onto a road surface. Which display form is employed in the projection unit 110 to display text or graphics may be determined in accordance with a user's preference, or may be automatically chosen in accordance with a condition of a road surface (roughness of a road surface).

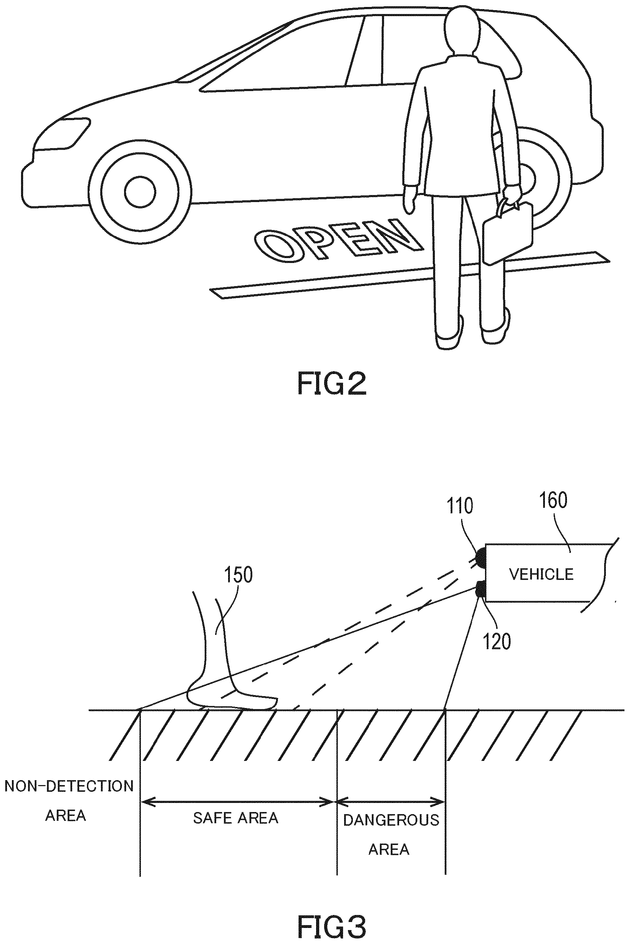

In the present embodiment, as the projection unit 110, either a projector which projects text or graphics on a road surface, or a laser projector which draws text or graphics on a road surface is used. While a display form in which text is displayed on a road surface as shown in FIG. 2 can be cited as one example of a display form, a display form is not limited to that. While it is considered that the projection unit 110 is provided in a lower portion of a door of a vehicle, the projection unit 110 may be provided in any place where no obstacle to projection onto a road surface is present, in a vehicle. Also, it is preferable that the projection unit 110 is provided in each of all doors of a vehicle. As for a door of a vehicle, the projection unit 110 can be applied to all doors of a vehicle, such as a front door and a rear door which can be opened and closed in a normal manner, a sliding door, a door of a hatchback, and a trunk.

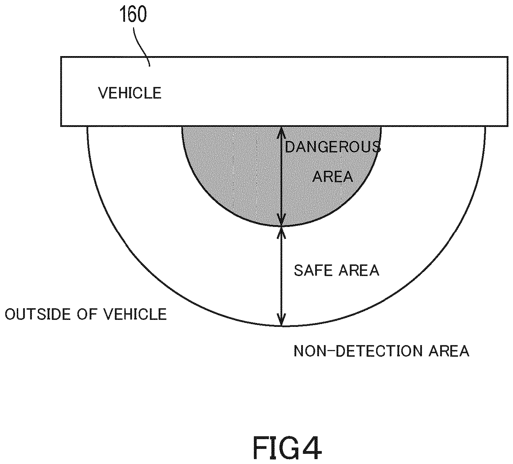

The noncontact sensor 120 functions as a sensor which detects an object 150 in an area where text or graphic are projected. As shown in FIGS. 3 and 4, an area where text or graphics are projected by the projection unit 110 includes a dangerous area which is dangerous if a component of a vehicle 160 is caused to operate with the object 150 (a user's foot, a stick, a wheelchair, or the like) being detected, and a safe area where a component of the vehicle 160 is allowed to safely operate with the object 150 being detected. The noncontact sensor 120 can detect the object 150 while distinguishing whether the object 150 is in a dangerous area or a safe area. In the present embodiment, as the noncontact sensor 120, a camera of a general type, an infrared camera, or a motion sensor such as a sonar sensor or a laser sensor, is used. It is noted that a component of the vehicle 160 is a component which forms a locking/unlocking system 210 which locks and unlocks a door, a door opening/closing system 220 which opens and closes a door, and a warning system 230 which gives notice of a danger.

The servo motor 130 functions as an actuator which drives the projection unit 110 which is mounted in the vehicle 160 in such a manner that the projection unit 110 can turn. To drive the servo motor 130 results in a change of a location of display of text or graphics which are projected by the projection unit 110, or in movement of text or graphics. In the present embodiment, while the servo motor 130 is cited as an example of an actuator, a motor of the other type such as a stepping motor may be used, and alternatively, a hydraulic or gas-pressure driving unit may be used.

The control unit 140 outputs a control signal which causes a component of the vehicle 160 to operate when the noncontact sensor 120 detects the object 150 in a safe area, a dangerous area, or both of the areas. When the noncontact sensor 120 detects the object 150 only in a safe area, the control unit 140 outputs a control signal which activates a locking/unlocking system or a door opening/closing system. Alternatively, when the noncontact sensor 120 detects the object 150 in a dangerous area, the control unit 140 outputs a control signal which activates a warning system. It is noted that when the noncontact sensor 120 detects the object 150 in each of a safe area and a dangerous area, the control unit 140 does not output a control signal which activates a locking/unlocking system or a door opening/closing system, but outputs a control signal which activates a warning system, in order to ensure safety.

The driving unit 200 in FIG. 1 includes a locking/unlocking system 210, a door opening/closing system 220, a warning system 230, and a vehicle control unit 240.

The locking/unlocking system 210 locks and unlocks a door of the vehicle 160. The locking/unlocking system 210 may be either a system which is existing in the vehicle 160 or a system which is retrofitted to the vehicle 160. After a door is locked by the locking/unlocking system 210, the door is kept being locked and cannot be opened. On the other hand, after a door is unlocked by the locking/unlocking system 210, the door is kept being unlocked and can be opened and closed.

The door opening/closing system 220 opens and closes a door of a vehicle, such as a front door and a rear door which are opened and closed in a normal manner, a sliding door, a door of a hatchback, and a trunk, without manual assistance. The door opening/closing system 220 may be either a system which is existing in the vehicle 160, or a system which is retrofitted to the vehicle 160.

The warning system 230 notifies a user of a danger. For example, in a case where a user is about to open a door while approaching the vehicle 160, there may possibly occur an incident in which a door comes into contact with a user, a wheelchair in which the user is, or the like. Thus, the warning system 230 sounds a horn of the vehicle 160, changes a displayed color of text of graphics provided by the projection unit 110, causes emission of light with lighting, or gives voice announcement, to notify a user of a danger.

The vehicle control unit 240 receives a control signal which is output from the control unit 140, and controls operations of the locking/unlocking system 210, the door opening/closing system 220, and the warning system 230 in accordance with the received control signal.

### [Display form and display area of the projection unit 110]

FIG. 2 is a view showing an example of a display form of text or graphics in the vehicle control apparatus according to the present embodiment. In this display form, the projection unit 110 displays text of "OPEN" and graphics representing a "line" on a road surface in a safe area which is defined in accordance with a size of a vehicle, a manner of opening/closing a door, and the like, to urge a user to step on a text portion of "OPEN" with his foot, with a view to opening a door. The foregoing display form is one example, and various display forms other than the foregoing display form can be applied. It is noted that a line is displayed in a safe position at a fair distance from the vehicle 160.

FIGS. 3 and 4 are views for explanation of a display area in the vehicle control apparatus according to the present embodiment. It is noted that FIG. 3 is a view of a display area when viewed from a rear side of the vehicle 160, and FIG. 4 is a view of a display area when viewed from above the vehicle 160. As shown in FIG. 3, the projection unit 110 projects projection light or laser light on a road surface within a range where the noncontact sensor 120 can make detection, to cause text or graphics as shown in FIG. 2 to be displayed on a road surface. As shown in FIGS. 2 to 4, an area where text or graphics are projected includes a dangerous area and a safe area, and the object 150 in a dangerous area and the object 150 in a safe area can be detected while being distinguished from each other by the noncontact sensor 120. When the object 150 is detected in a dangerous area, there is a fear that a door may come into contact with a user if a door is opened, for example, and thus, a door is not allowed to be opened. Also, when the object 150 is detected only in a safe area, there is no fear that a door may come into contact with a user if a door is opened, and thus, a door is opened. It is noted that an area outside of a safe area is a non-detection area where the noncontact sensor 120 cannot detect the object 150. Though a dangerous area and a safe area are shown so as to be concentric with each other in FIG. 4 by demarcation of a detection range of the noncontact sensor 120, the detection range being variable with a vehicle type, those areas may be deformed to be in an oval shape in some cases. In a case where a component of a vehicle is a door, for example, a movable range of a door, the movable range depending on a vehicle type, is a dangerous area.

### [Operations of vehicle control apparatus]

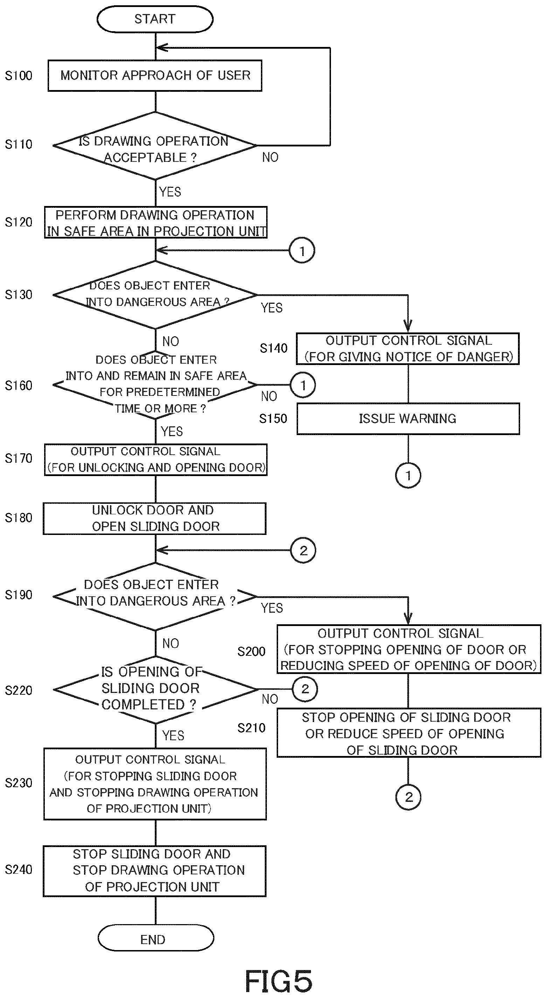

FIG. 5 is a flow chart showing an example of operations of the vehicle control apparatus according to the present embodiment. Below, operations of the vehicle control apparatus will be described in detail with reference to the drawings. In the following description, control over a vehicle provided with a sliding door will be dealt with as one example.

The detection unit 100 monitors approach of a user (S100), and judges whether or not an drawing operation is acceptable (S110). Monitoring of approach of a user is achieved by detection of approach of an intelligent key which is carried by a user, to the vehicle 160. Also, in a case where the vehicle 160 is a bus, monitoring is achieved by detection of approach of a bus to a bus stop where a user is waiting. Further, in a case where the vehicle 160 is a taxicab, monitoring is achieved by detection of approach of a taxicab to a cabstand where a user is waiting. Also, it is judged whether or not a drawing operation is acceptable by comprehensively judging whether or not there is an available space in an area where a drawing operation is to be performed, whether or not there is an obstacle in an area where a drawing operation is to be performed, whether or not a following vehicle approaches, and the like. If a drawing operation is not acceptable (S110: NO), no operation is performed, and a return to an operation in the step S100 is made, so that approach of a user is monitored. On the other hand, if a drawing operation is acceptable (S110: YES), a drawing operation is performed in a safe area by the projection unit 110 (S120). What is displayed by a drawing operation in a safe area is text or graphics as shown in FIG. 2.

The noncontact sensor 120 judges whether or not the object 150 enters into a dangerous area (S130). If the object 150 enters into a dangerous area (S130: YES), the control unit 140 outputs a control signal for giving a notice of a danger (S140), and in response to the control signal, the vehicle control unit 240 drives the warning system 230 to issue a warning (S150). Thereafter, the noncontact sensor 120 judges once again whether or not the object 150 enters into a dangerous area (S130).

On the other hand, if the object 150 does not enter into a dangerous area (S130: NO), then, the control unit 140 judges whether or not the object 150 enters into and remains in a safe area for a predetermined time or more (S160). If the object 150 does not enter into and remain in a safe area for a predetermined time or more (S160: NO), the control unit 140 judges once again requirements for the steps S130 and S160 while text or graphics are kept displayed by the projection unit 110. On the other hand, if the object 150 enters into and remains in a safe area for a predetermined time or more (S160: YES), the control unit 140 outputs a control signal for unlocking and opening a door (S170). The vehicle control unit 240, in response to the control signal, drives the locking/unlocking system 210 and the door opening/closing system 220, to unlock a door and open a sliding door (S180).

Next, the control unit 140 judges whether or not the object 150 enters into a dangerous area in the process of opening a sliding door (S190). If the object 150 enters into a dangerous area (S190: YES), the control unit 140 outputs a control signal for stopping opening of a door or for reducing a speed of opening of a door (S200). In response to the control signal, the vehicle control unit 240 stops opening of a door or reduces a speed of opening of a door (S210). Thereafter, the control unit 140 judges once again whether or not the object 150 enters into a dangerous area (S190).

Then, the control unit 140 judges whether or not opening of a sliding door is completed (S220). If opening of a sliding door is not completed (S220: NO), a return to an operation in the step S190 is made, and the control unit 140 judges once again whether or not the object 150 enters into a dangerous area (S190). If opening of a sliding door is completed (S220: YES), the control unit 140 outputs a control signal for stopping a sliding door, and outputs a control signal for stopping an drawing operation of the projection unit 110 (S230). In response to the control signals, the vehicle control unit 240 stops opening of a door and stops a drawing operation of the projection unit 110 (S240).

As described above, in the vehicle control apparatus according to the present embodiment, a user can safely open a door of the vehicle 160 without coming into contact with a door to be opened, only by stepping on, or getting on, text or graphics projected onto a road surface, with a user's foot.

It is noted that though description has been made mainly on the assumption that a user opens a door of a private car, a rent-a-car, or a shared car, for the flow chart in FIG. 5, the vehicle control apparatus according to the present embodiment is also applicable to cases where the vehicle 160 is a bus, a taxicab, a truck, and the like. For example, when a bus stops at a bus stop, or when a taxicab stops in a cabstand, text or graphics are displayed on a road surface. Then, a user can cause a door of a bus or a taxicab to be safely opened on his own initiative by stepping on the displayed text or graphics with his foot.

It is noted that though a display area is determined two-dimensionally on a road surface and a dangerous area and a safe area of the display area are detected two-dimensionally in the present embodiment, a display area may be determined so as to include a three-dimensional object or the like on a road surface, so that a dangerous area and a safe area of the display area can be detected three-dimensionally. Also, for detection in a dangerous area and a safe area, an accuracy in detection may be corrected in consideration of environments such as brightness or weather, or a location of projection may be corrected in consideration of dislocation caused by inclination of the vehicle 160.

The above-described vehicle control apparatus according to the present embodiment produces the following effects of:
1. Making a place to be handled visible.
   Since text or graphics are displayed on a road surface, a user can see where to put his foot in handling, at a glance.
2. Saving a user from having to step on one foot even while a user is carrying a baggage.
   All that is required of a user is to step on a display area of text or graphics, and so a user can open and close a door while carrying a baggage and standing on both feet.
3. Eliminating a danger of contact with a door.
   A door is opened while a user's foot is in a safe area. In the event that a user's foot enters into a dangerous area in the process of opening a door, opening of a door is stopped or a speed of opening of a door is reduced. Hence, a door can be opened safely.
4. Reducing an erroneous reaction caused due to an animal or the like.

Even if an animal enters into a safe area, a door is not opened unless the animal remains in a safe area for a predetermined time or more. Hence, an animal or the like which is apt to escape in response to illuminated light or the like provided by the projection unit, is hard to detect. Accordingly, an erroneous operation in which a door is opened due to an animal can be prevented.

In the present embodiment, opening of a door has been described as one example of an embodiment. However, a target to which the vehicle control apparatus according to the present invention is applied is not limited to opening of a door. For example, closing of a door, lifting-up of a cargo bed in a case of a dump truck, and the like are conceivable.

Hereinabove, while the vehicle control apparatus according to the present invention has been described while showing the embodiment as an example, it goes without saying that the technical scope of the present invention is not limited to the scope of the embodiment which has been shown as an example.

## Claims

1. A vehicle control apparatus comprising:
a projection unit (110) configured to project text or graphics onto a road surface;
a sensor (120) configured to detect an object (150) in an area where the text or the graphics are projected; and
a control unit (140) configured to output a control signal that causes a component of a vehicle (160) to operate when the sensor detects the object,
wherein the component of the vehicle (160) is a component that forms a locking/unlocking system (210) configured to lock and unlock a door, a door opening/closing system (220) configured to open and close a door, and a warning system (230) configured to give notice of a danger,
wherein an area where the sensor detects the object includes a dangerous area that is dangerous when the component of the vehicle (160) is caused to operate with the object (150) being detected, and a safe area where the component of the vehicle (160) is allowed to safely operate with the object being detected,
the sensor (120) is configured to make detection while distinguishing between the dangerous area and the safe area,
the control unit (140) is configured to output the control signal that activates the locking/unlocking system (210) or the door opening/closing system (220) when the sensor (120) detects the object (150) in the safe area,
the control unit (140) is configured to output the control signal that activates the warning system (230) when the sensor (120) detects the object (150) in the dangerous area, and
wherein the control unit (140) is configured to output the control signal that stops opening of the door being performed by the door opening/closing system (220), or to reduce a speed of opening of the door, when the sensor (120) detects the object (150) in the dangerous area after the control signal that activates the locking/unlocking system or the door opening/closing system (220) is output.

2. The vehicle control apparatus according to claim 1, wherein the text or the graphics are projected in a form of a still image, animation, or a moving image.

3. The vehicle control apparatus according to claim 1, wherein the projection unit (110) is a projector configured to project the text or the graphics on the road surface, or a laser projector configured to draw the text or the graphics on the road surface.

4. The vehicle control apparatus according to claim 1, wherein the projection unit (110) is mounted in the vehicle in such a manner that the projection unit (110) is allowed to turn, and is driven by an actuator, an operation of which is controlled by the control unit (140).

## Patentansprüche

1. Fahrzeugsteuerungsvorrichtung, umfassend:
eine Projektionseinheit (110), die dazu konfiguriert ist, Text oder Grafiken auf eine Straßenoberfläche zu projizieren;
einen Sensor (120), der dazu konfiguriert ist, ein Objekt (150) in einem Bereich zu erkennen, in welchen der Text oder die Grafiken projiziert werden; und
eine Steuereinheit (140), die dazu konfiguriert ist, ein Steuersignal auszugeben, das veranlasst, dass eine Komponente eines Fahrzeugs (160) in Betrieb geht, wenn der Sensor das Objekt erfasst,
wobei die Komponente des Fahrzeugs (160) eine Komponente ist, die ein Verriegelungs-/Entriegelungssystem (210) bildet, das dazu konfiguriert ist, eine Tür zu verriegeln und zu entriegeln, ein Türöffnungs-/Schließsystem (220), das dazu konfiguriert ist, eine Tür zu öffnen und zu schließen, und ein Warnsystem (230), das dazu konfiguriert ist, eine Gefahr anzuzeigen,
wobei ein Bereich, in dem der Sensor das Objekt erkennt, einen gefährlichen Bereich umfasst, der gefährlich ist, wenn die Komponente des Fahrzeugs (160) dazu veranlasst wird, bei Erkennen des Objekts (150) in Betrieb zu gehen, sowie einen sicheren Bereich, in dem die Komponente des Fahrzeugs (160) sicher in Betrieb gehen kann, wenn das Objekt erkannt wird,
der Sensor (120) dazu konfiguriert ist, eine Erkennung vorzunehmen und dabei eine Abgrenzung von dem gefährlichen Bereich und dem sicheren Bereich zu machen,
die Steuereinheit (140) dazu konfiguriert ist, das Steuersignal auszugeben, das das Verriegelungs-/Entriegelungssystem (210) oder das Türöffnungs-/Schließsystem (220) aktiviert, wenn der Sensor (120) das Objekt (150) im sicheren Bereich erkennt,
die Steuereinheit (140) dazu konfiguriert ist, das Steuersignal auszugeben, das das Warnsystem (230) aktiviert, wenn der Sensor (120) das Objekt (150) im gefährlichen Bereich erkennt, und
wobei die Steuereinheit (140) dazu konfiguriert ist, das Steuersignal auszugeben, das das durch das Türöffnungs-/Schließsystem (220) ausgeführte Öffnen der Tür stoppt, oder eine Öffnungsgeschwindigkeit der Tür zu reduzieren, wenn der Sensor (120) das Objekt (150) in dem gefährlichen Bereich erkennt, nachdem das Steuersignal, das das Verriegelungs-/Entriegelungssystem oder das Türöffnungs-/Schließsystem (220) aktiviert, ausgegeben wird.

2. Fahrzeugsteuerungsvorrichtung nach Anspruch 1, wobei der Text oder die Grafiken in Form eines Standbildes, einer Animation oder eines bewegten Bildes projiziert werden.

3. Fahrzeugsteuerungsvorrichtung nach Anspruch 1, wobei die Projektionseinheit (110) ein Projektor ist, der dazu konfiguriert ist, den Text oder die Grafiken auf die Straßenoberfläche zu projizieren, oder ein Laserprojektor, der dazu konfiguriert ist, den Text oder die Grafiken auf die Straßenoberfläche zu zeichnen.

4. Fahrzeugsteuerungsvorrichtung nach Anspruch 1, wobei die Projektionseinheit (110) in dem Fahrzeug derart eingebaut ist, dass sich die Projektionseinheit (110) drehen kann, und von einem Aktor angetrieben wird, dessen Betrieb durch die Steuereinheit (140) gesteuert wird.

## Revendications

1. Appareil de commande de véhicule comprenant :
une unité de projection (110) conçue pour projeter un texte ou des graphiques sur une surface de route ;
un capteur (120) conçu pour détecter un objet (150) dans une zone où le texte ou les graphiques sont projetés ; et
une unité de commande (140) conçue pour délivrer en sortie un signal de commande qui amène un composant d'un véhicule (160) à fonctionner lorsque le capteur détecte l'objet,
dans lequel le composant du véhicule (160) est un composant qui forme un système de verrouillage/déverrouillage (210) conçu pour verrouiller et déverrouiller une porte, un système d'ouverture/fermeture de porte (220) conçu pour ouvrir et fermer une porte, et un système d'avertissement (230) conçu pour avertir d'un danger,
dans lequel une zone où le capteur détecte l'objet comporte une zone dangereuse qui est dangereuse lorsque le composant du véhicule (160) est amené à fonctionner avec l'objet (150) qui est détecté, et une zone sûre où le composant du véhicule (160) est autorisé à fonctionner en toute sécurité avec l'objet qui est détecté,
le capteur (120) est conçu pour effectuer une détection tout en distinguant entre la zone dangereuse et la zone sûre,
l'unité de commande (140) est conçue pour délivrer en sortie le signal de commande qui active le système de verrouillage/déverrouillage (210) ou le système d'ouverture/fermeture de porte (220) lorsque le capteur (120) détecte l'objet (150) dans la zone sûre,
l'unité de commande (140) est conçue pour délivrer en sortie le signal de commande qui active le système d'avertissement (230) lorsque le capteur (120) détecte l'objet (150) dans la zone dangereuse, et
dans lequel l'unité de commande (140) est conçue pour délivrer en sortie le signal de commande qui arrête l'ouverture de la porte effectuée par le système d'ouverture/fermeture de porte (220), ou pour réduire une vitesse d'ouverture de la porte, lorsque le capteur (120) détecte l'objet (150) dans la zone dangereuse après la sortie du signal de commande qui active le système de verrouillage/déverrouillage ou le système d'ouverture/fermeture de porte (220).

2. Appareil de commande de véhicule selon la revendication 1, dans lequel le texte ou les graphiques sont projetés sous la forme d'une image fixe, d'une animation, ou d'une image mobile.

3. Appareil de commande de véhicule selon la revendication 1, dans lequel l'unité de projection (110) est un projecteur conçu pour projeter le texte ou les graphiques sur la surface de route, ou un projecteur à laser conçu pour dessiner le texte ou les graphiques sur la surface de route.

4. Appareil de commande de véhicule selon la revendication 1, dans lequel l'unité de projection (110) est montée dans le véhicule de manière à ce que l'unité de projection (110) est autorisée à tourner, et est entraînée par un actionneur dont le fonctionnement est commandé par l'unité de commande (140).
